# EUROPEAN PATENT APPLICATION

(11) **EP 1 038 439 A1**
(43) Date of publication of application: **27.09.2000**
(21) Application number: 00302276.1
(22) Date of filing: 21.03.2000
(51) Int. Cl.: A01K 93/00

(54) **Fishing float and rig**

(30) Priority: 22.03.1999 GB 9906595; 10.08.1999 GB 9918847
(71) Applicant: Baker, David John, Hainault, Ilford, IG6 3TQ (GB); Hamburger, Michael Hughie, Ilford, Essex, IG3 9EE (GB)
(72) Inventor: Baker, David John, Hainault, Ilford, IG6 3TQ (GB); Hamburger, Michael Hughie, Ilford, Essex, IG3 9EE (GB)
(74) Representative: Tebbit, Antony Hugh Edward

(57) **Abstract**

A float fishing rig comprises a float having a stem 6 for righting a horizontally extending upper portion 5 adapted to float substantially at the surface of a body of water. The float upper portion 5 has a convex upper surface, and the float upper portion 5 and the float stem 6 each include a line guide 12, 7 for a fishing line 13. An indicator antenna 2 is resiliently held upstanding from the float 5, for example by an elastomeric sleeve. The float includes guide means 10, 9, 7 for guiding an indicator line which may be connected [1] to the antenna 2 and at 8 to the fishing line 13 leading to a bottom rig carried by the fishing line. A pull on the bottom rig will upset the antenna 2 to give an indication of a bite.

## Description

This invention relates to fishing floats.

Fishing floats are well known and generally comprise a buoyant piece, for example of wood or plastic, though cork has also been used. The top is usually brightly coloured for ease of visibility by the angler, and the bottom, that is the part which will be below the surface of the water during use, is dull coloured so that it cannot be seen easily by the fish. In use, the float is connected part way along a fishing line, and a bottom rig comprising a baited hook or other lure is suspended from the float on a bottom part of the fishing line.

In use, when a fish bites, the line is pulled down submerging the float, and thus indicating to the angler that a fish has taken the bait. Unfortunately, there is a trade-off as between visibility and reliability of a bite indication and the buoyancy of a conventional float. The buoyancy of the float imparts a resistance to the line as it is being taken by the fish with the result that a highly buoyant float may so resist motion of the hook that the fish will merely mouth the bait without taking it properly. In the result, when the angler strikes, he does not set the hook, but rather snatches the hook away from the fish. A lighter or less buoyant float which does not resist as a fish starts to investigate the bait is also susceptible to dipping beneath the water surface due to currents in the water as well as to the actions of a fish, and may accordingly be unreliable as a bite indicator.

It is an object of this invention to provide a novel form of fishing float rig in which these disadvantages are alleviated.

According to the present invention, there is provided a float fishing rig characterised in that it comprises in combination: a float having a lower stem portion for righting a horizontally extending upper portion adapted to float substantially at the surface of a body of water, said upper portion having a convex upper surface, an indicator antenna and means for resiliently holding said antenna upstanding from the float, and in which the upper portion and the stem each include a line guide for a fishing line, and at least said upper portion includes guide means for guiding an indicator line which may be connected between said antenna and a said fishing line leading to a bottom rig carried by the fishing line whereby a pull on the bottom rig will upset the antenna.

When an angler makes use of a float fishing rig in accordance with the invention, an indication of a bite by a fish will be given by a dipping of the antenna, and not by a pulling under of the float. Thus any line resistance felt by the fish will be due to the resilience of means holding the antenna upstanding from the float, and not to the buoyancy of the float.

A good indication can be given by the displacement of the antenna e.g. from a near vertical position to one which is near horizontal, and resistance over small initial displacements of the bottom rig while the fish is still investigating the bait is dependent on the resilience of the antenna holder, and such resistance may be kept low by suitable choice of antenna holder.

A float fishing rig according to the invention preferably comprises one or more of the following optional features:
said float upper portion is substantially circular in plan view.
said float upper portion is domed.
said stem comprises a buoyant portion.
said stem comprises a depending weighted wire stem.
said stem carries a said line guide and a separate indicator line guide.
a said indicator line guide is carried by said buoyant stem portion.
said upper float portion comprises a hole constituting a said indicator line guide.
said upper float portion carries a mounting post carrying a resilient sleeve which in turn carries said antenna.
said resilient sleeve is constituted by a tube of elastomeric material.

Preferred embodiments of the invention will now be described with reference to the accompanying diagrammatic drawings in which:
**Figures 1 and 2** respectively show a first embodiment of float fishing rig in accordance with the invention in "waiting" and in "bite indicating" positions, and
**Figure 3** shows the rig in plan view, and
**Figures 4, 5 and 6** are corresponding views of a second embodiment of the invention.

The float fishing rig shown in the drawings comprises a float having a disc like upper portion 5 with a convex, domed upper surface and a stem 6. The upper surface is convex to shed water. The float member 5 is righted by the stem 6 which terminates in an eye 7 which may be weighted, and the arrangement is such that in use the upper float portion 5 lies substantially at the surface of the body of water being fished.

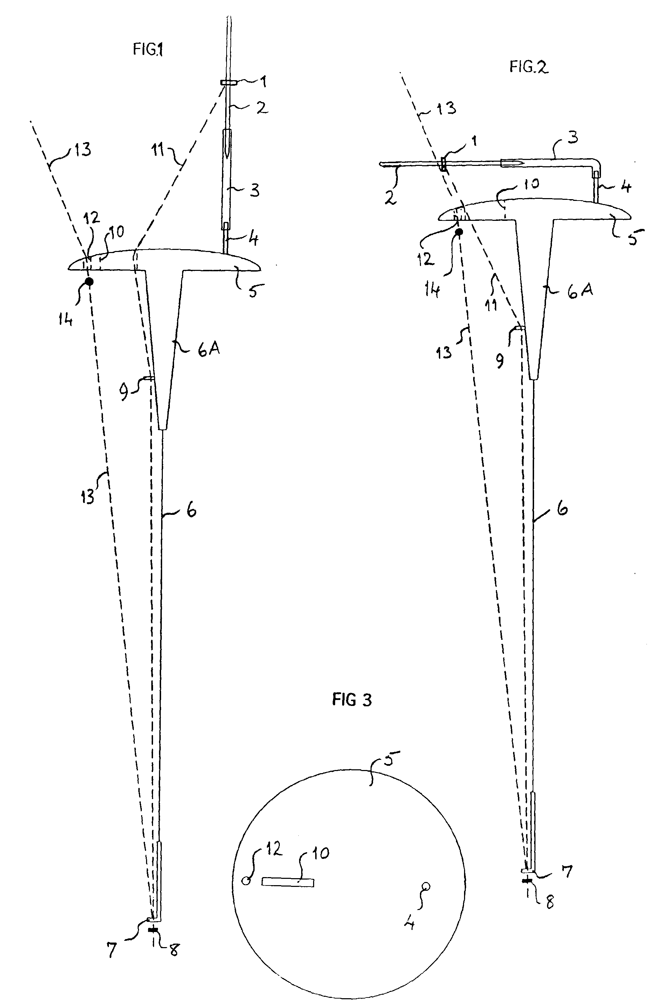

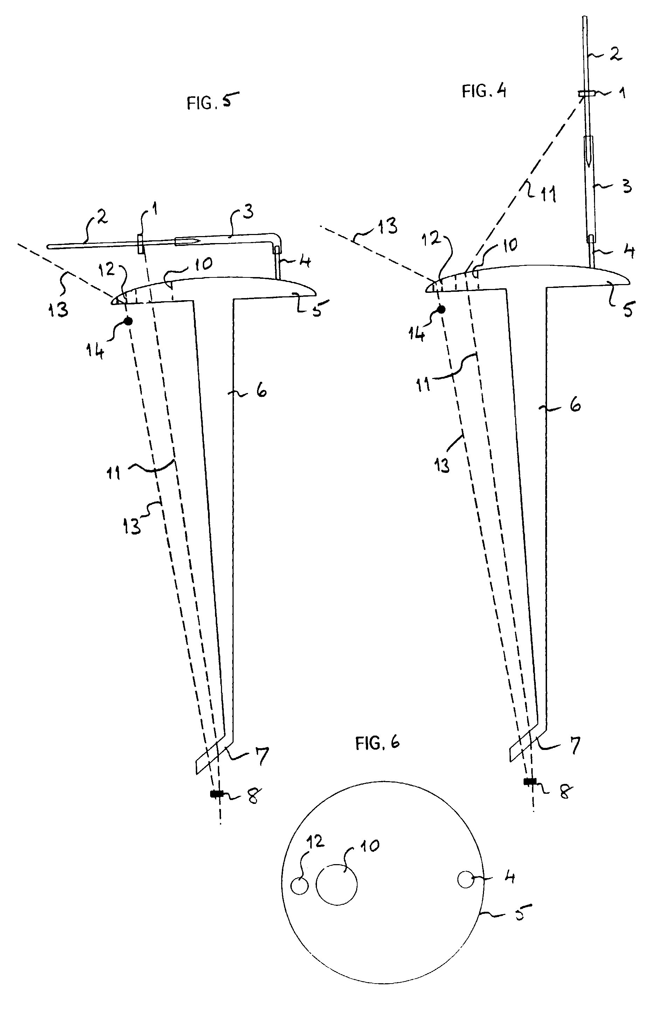

In the embodiment of Figures 1 to 3, the stem 6 comprises an upper stem portion 6A which is formed with the upper float portion 5, the lower portion of the stem 6 being formed of wire, e.g. of steel. In the embodiments of Figures 4 to 6, the entire stem 6 is constituted as a moulding which may be integral with the upper float portion 5.

Connected to the top of the upper float portion is an indicator supporting post 4. A flexible rubber tube 3, or other resilient sleeve [for example a coils spring could be used] is slid over that post and also over the end of an indicator antenna 2. A ring 1 is provided on the antenna 2 for retaining an end of a length of indicator line 11.

In Figures 1 to 3, the indicator line 11 runs through a hole 10 in the form of a slot in the upper float portion 5, through an eye 9 attached to the float stem 6A and through the line eye 7 at the base of the wire stem 6 and it is secured to the main fishing line 13 by a line connector 8. In Figures 4 to 6, the eye 9 is absent, and the hole 10 is circular. This and other modifications to the form of the float are for the purpose of facilitating its manufacture as an integral moulding of plastics material.

The main line 13 also passes through the eye 7, and it passes through a main line guide hole 12 in the upper float portion 5. A locking shot 14 is optionally provided on the main line 13.

The base of the indicator line guide hole 10 is well-spaced horizontally from the indicator support post 4, so that the indicator line 11 can easily pull the antenna 2 over against the resilience of the sleeve 3 to indicate a bite. The force required to bend over the antenna [which will be felt as resistance by a fish] can be adjusted as required by choosing a suitable sleeve 3. Control may also be exercised by the angler by varying the free length of the sleeve 3 between the ends of the antenna 2 and the support post 4.

When a fish bites at a baited hook suspended from the float rig illustrated, the main line 13 will be pulled down and this will carry down with it the indicator line 11. This in turn will cause the antenna to bend over much as shown in Figures 2 and 5, so providing a highly visible indication that a fish is in process of taking the bait.

## Claims

1. A float fishing rig characterised ion that it comprises in combination: a float having a lower stem portion [6] for righting a horizontally extending upper portion [5] adapted to float substantially at the surface of a body of water, said upper portion [5] having a convex upper surface, an indicator antenna [2] and means [4] for resiliently holding said antenna [2] upstanding from the float, and in which the upper portion [5] and the stem [6] each include a line guide [11, 7] for a fishing line [12], and at least said upper portion includes guide means [10] for guiding an indicator line [10] which may be connected between said antenna [2] and a said fishing line [12] leading to a bottom rig carried by the fishing line [12] whereby a pull on the bottom rig will upset the antenna [2].

2. A float fishing rig according to claim 1, wherein said float upper portion [5] is substantially circular in plan view.

3. A float fishing rig according to claim 1 or 2, wherein said float upper portion [5] is domed.

4. A float fishing rig according to any preceding claim, wherein said stem comprises a buoyant portion [6a].

5. A float fishing rig according to any preceding claim, wherein said stem comprises a depending weighted wire stem [6].

6. A float fishing rig according to any preceding claim, wherein said stem carries a said line guide [7] and a separate indicator line guide [9].

7. A float fishing rig according to claims 4 and 6, wherein a said indicator line guide [9] is carried by said buoyant stem portion [6a].

8. A float fishing rig according to any preceding claim, wherein said upper float portion [5] comprises a hole [10] constituting a said indicator line guide.

9. A float fishing rig according to any preceding claim, wherein said upper float portion [5] carries a mounting post [4] for carrying a resilient sleeve [3] which in turn is adapted to carry said antenna [2].

10. A float fishing rig according to claim 9, wherein said resilient sleeve [3] is constituted by a tube of elastomeric material.
